Europäisches Patentamt

European Patent Office

Office européen des brevets

(19)

(11) Numéro de publication: **0 017 546**
**B1**

(12)

# FASCICULE DE BREVET EUROPEEN

(45) Date de publication du fascicule du brevet:
**20.10.82**

(51) Int. Cl.³: **F 04 D 29/54,** F 01 D 11/08

(21) Numéro de dépôt: **80400373.9**

(22) Date de dépôt: **20.03.80**

(54) Support amovible de revêtement d'étanchéité pour carter de soufflante de turboréacteur.

(30) Priorité: **30.03.79 FR 7908583**

(43) Date de publication de la demande:
**15.10.80 Bulletin 80/21**

(45) Mention de la délivrance du brevet:
**20.10.82 Bulletin 82/42**

(84) Etats contractants désignés:
**DE FR GB IT SE**

(56) Documents cités:

**FR-A-1 399 245**
**FR-A-1 541 216**
**GB-A-840 573**
**US-A-2 554 602**
**US-A-4 055 041**

(73) Titulaire: **SOCIETE NATIONALE D'ETUDE ET DE
CONSTRUCTION DE MOTEURS D'AVIATION,
"S.N.E.C.M.A.", 2 Boulevard Victor, F-75015 Paris (FR)**

(72) Inventeur: **Lardellier, Alain Marie Joseph, 36, rue Dajot,
F-77000 Melun (FR)**

(74) Mandataire: **Moinat, François et al, S.N.E.C.M.A. Service
des Brevets Boîte Postale 81, F-91003 Evry Cedex (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Support amovible de revêtement d'étanchéité pour carter de soufflante de turboréacteur

L'invention concerne un support amovible de revêtement d'étanchéité pour carter de soufflante de turboréacteur, le carter étant au moins partiellement revêtu de panneaux acoustiques.

Un tel support est connu du US-A-4 055 041 selon lequel la partie avant du carter peut être rabattue; après quoi on a accès au revêtement et à son support.

Les carters de soufflantes de turboréacteurs sont tapissés, sur leur paroi interne, de résines ou de structures en nids d'abeilles susceptibles d'être usées par les aubes de la soufflante sans que celles-ci aient à subir de dommage. Ce revêtement a pour fonction de réaliser l'étanchéité la meilleure possible entre les extrémités des aubes de soufflante et le carter qui les entoure. Comme il est compréhensible, les frottements des aubes lors du fonctionnement, par suite de déformations tant thermiques que mécaniques, finissent par provoquer une usure telle que l'étanchéité due au revêtement d'étanchéité est diminuée. Il est alors nécessaire de procéder à son remplacement, qui est une opération plus ou moins complexe selon le support de ce revêtement. Lorsque le support est constitué par la paroi même du carter, il est nécessaire de démonter au moins partiellement (voir US. A 4 055 041) le carter, ce qui entraîne parfois le démontage, toujours délicat, du support d'accessoires. Lorsque le revêtement d'étanchéité est appliqué sur une virole d'acier démontable par boulons du reste du carter, l'encombrement radial est augmenté d'une manière qui peut être inacceptable dans certains cas. Enfin, le revêtement d'étanchéité peut se présenter, sous forme de segments boulonnés, démontables de l'intérieur. Une telle réalisation est connue du FR. A 1 541 216 dans lequel le revêtement d'étanchéité utilisé est un nid d'abeilles fixé sur des plaques supports constituées d'un élément de renforcement en fibres de verre enrobé de résine thermodurcissable. La paroi intérieure du ventilateur est recouverte par les plaques portant le revêtement d'étanchéité, fixées par des vis passant par des trous correspondants du carter. Bien que facilitant le démontage et le remplacement du revêtement d'étanchéité, ces solutions boulonnées ont un grave inconvénient par les points faibles introduits dans le carter dans des zones critiques c. à. d. près des aubes de soufflante elles-mêmes.

L'invention vise à réaliser un support amovible de revêtement d'étanchéité réparable en place sur le moteur, ou démontable d'une seule pièce sans exiger le démontage préalable du carter, sans augmenter l'encombrement radial et permettant également de réaliser un gain important de poids.

Selon l'invention, le support amovible de revêtement d'étanchéité pour carter de soufflante de turboréacteur, le carter étant au moins partiellement revêtu de panneaux acoustiques, est caractérisé en ce que le support amovible est constitué d'au moins deux viroles concentriques à l'intérieur du carter: une virole intérieure dont une partie de la surface interne présente un profil adapté à l'écoulement de la veine d'air et dont une autre partie, correspondant approximativement à la zone couverte par les aubes du rotor, porte d'une manière indésolidarisable le revêtement d'étanchéité, une virole extérieure présentant sur sa surface externe des portées cylindriques susceptibles de coopérer par emmanchement avec des portées prévues sur la surface intérieure du carter, l'espace compris entre les deux viroles étant rempli par un matériau de remplissage, et d'au moins une virole de section en U fixant l'une à l'autre, par au moins l'une de leurs extrémités, les deux viroles concentriques, la partie solidaire de la virole extérieure recevant en dehors et en arrière de la zone couverte par les aubes des moyens de liaison qui immobilisent en rotation le support dans le carter.

Au moins une des viroles est en résine synthétique renforcée par des fibres.

Les explications et figure données ci-après à titre d'exemple permettront de comprendre comment peut être réalisée l'invention.

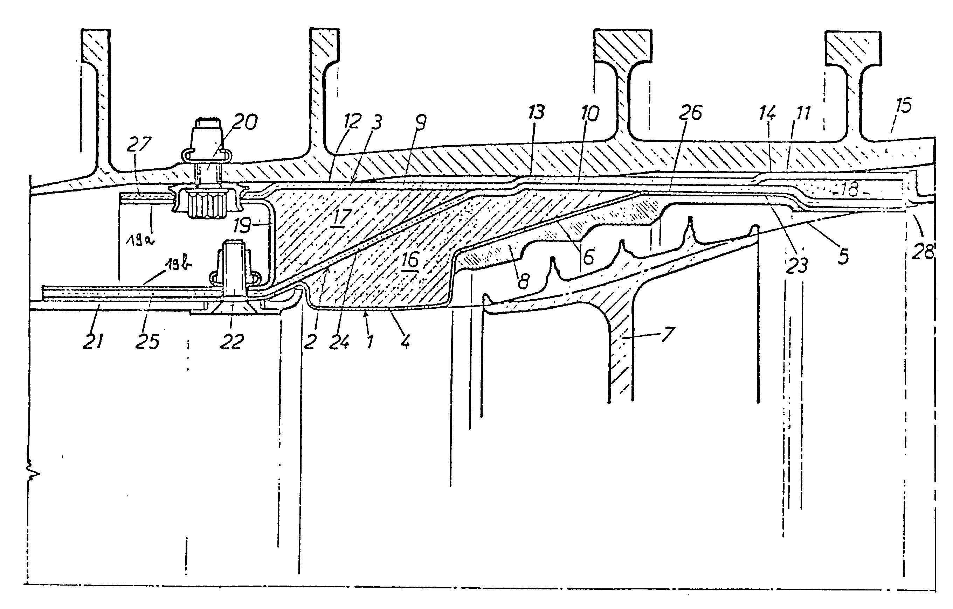

La figure unique représente une demi-coupe axiale d'un support selon l'invention emmanché dans un carter.

Le support de revêtement d'étanchéité comporte trois viroles 1, 2, 3 concentriques. Une virole intérieure 1 dont une partie 4 de la surface interne présente un profil adapté à l'écoulement de la veine d'air et représenté par le trait interrompu 5. Une autre partie 6 de la surface interne, correspondant approximativement à la zone couverte par les aubes 7 du rotor de soufflante, porte le revêtement d'étanchéité 8.

La virole intermédiaire 2 supporte, sur une partie de sa surface, la virole intérieure 1.

La virole extérieure 3 présente sur sa surface externe des portées cylindriques 9, 10, 11 qui coopèrent avec des portées 12, 13, 14 prévues sur la surface intérieure du carter 15. Ces portées ont pour fonction de maintenir la structure serrée contre la paroi du carter, les diamètres des portées cylindriques du support étant légèrement supérieurs à ceux des portées cylindriques du carter. Pratiquement, avant emmanchement, l'écart entre ces diamètres est de 1 à 2%.

Les espaces 16, 17 et 18 compris entre les parois des viroles sont remplis d'un matériau de remplissage.

Une virole 19 de section en U relie par sa partie 19a les extrémités côté aval de la virole extérieure 3 à celles des viroles intermédiaire 2 et intérieure 1 par sa partie 19b, ces deux dernières viroles étant déjà solidarisées sur une partie de leur surface côté amont et leur extrémité étant reliée à cet endroit à celle de la virole extérieure 3 par une partie repliée 28 de la virole intérieure 1. Cette virole 19 a plusieurs fonctions: participer à la tenue mécanique du support, permettre la fixation du support sur le carter 15 par des boulons 20 pour empêcher sa rotation, et permettre l'accrochage des panneaux acoustiques 21 par les moyens 22, les panneaux prolongeant le profil aérodynamique représenté par le trait 5.

Une structure équivalente est obtenue en conservant seulement deux viroles concentriques: la virole intérieure 1, la virole extérieure 3 et la virole en forme de U 19, pour assurer la rigidité du support.

Selon la forme de réalisation préférée représentée par la figure, les viroles sont réalisées en résine époxy armée avec des fibres de verre et sont obtenues de manière connue soit par bobinage, soit par nappage d'un moule creux et imprégnation à la résine.

Les espaces 16, 17 et 18 entre les viroles sont remplis par une résine chargée de microbilles de verre, ou bien, lorsque la zone risque d'être balayée par le rotor de soufflante, par des nids d'abeilles ou par de l'air. Les viroles sont collées entre elles sur leurs parties adjacentes.

Les trois viroles peuvent présenter des épaisseurs différentes, comme montré sur l'exemple de réalisation de la figure, les viroles extérieure et intermédiaire ayant une épaisseur suffisante pour supporter les efforts mécaniques, tandis que la virole intérieure, qui ne supporte que le revêtement d'étanchéité, a une épaisseur relativement faible.

Dans la forme de réalisation, non représentée, comportant seulement deux viroles, on aura intérêt à donner à la virole intérieure une épaisseur suffisante pour qu'elle puisse supporter une partie des contraintes mécaniques. La structure à trois viroles fait assurer à chacune d'elles une des fonctions suivantes: support de revêtement d'étanchéité, support des panneaux acoustiques, liaison avec le carter.

Les profils des différentes viroles ont été choisis de manière à éviter les inconvénients dus aux ingestions de corps étrangers ou aux déformations. C'est ainsi qu'en cas d'impact, l'aube atteinte balaie un volume torique d'où le profil donné à la virole intermédiaire 2, travaillante, qui doit rester en dehors du volume dangereux. De même, on a évité la présence de trous dans la zone de rétention du carter de soufflante et la structure a été conçue de manière qu'elle ne perturbe pas la cinématique d'éjection des débris en cas de rupture ou perte d'aube, de façon à éviter une éjection de débris dans des zones où les répercussions seraient encore plus graves.

L'avantage d'une virole intérieure 1 mince, donc mécaniquement peu sollicitée, est de permettre en cas de détérioration du revêtement d'étanchéité une réparation en place facile et une reconstitution de ce revêtement. Lorsque la virole intérieure est épaisse et participe à la tenue mécanique de la structure, sa détérioration nécessite une dépose du support.

Le support préféré comporte donc trois viroles concentriques:
— une virole intérieure 1 présentant dans le sens de l'écoulement de la veine d'air au moins une première partie cylindrique 23 dont l'extrémité 28 est repliée vers l'extérieur et une deuxième partie conique 6 sur lesquelles est fixé le revêtement d'étanchéité 8, une troisième partie sensiblement cylindrique 4 suivant le profil aérodynamique d'écoulement;
— une virole intermédiaire 2 présentant dans le sens de l'écoulement de la veine d'air une première partie cylindrique 26 s'étendant approximativement sur les première partie cylindrique 23 et deuxième partie conique 6 de la virole intérieure 1, une deuxième partie conique 24 recouvrant approximativement la troisième partie cylindrique 4 de la virole intérieure 1; une troisième partie cylindrique 25 venant approximativement dans le prolongement de la troisième partie cylindrique 4 de la virole intérieure 1;
— une virole extérieure 3 présentant dans le sens de l'écoulement de la veine d'air quatre parties cylindriques 11, 10, 9, 27 de diamètres décroissants, au moins une des premières parties cylindriques 10 selon la figure étant solidarisée à la partie cylindrique 26 de la virole intermédiaire 2;
— et une virole en forme de U 19, fixée entre la troisième partie cylindrique 25 de la virole intermédiaire 2 par sa partie 19b et la quatrième partie cylindrique 27 de la virole extérieure 3 par sa partie 19a.

Le mode d'utilisation du support de revêtement d'étanchéité est le suivant: le support est présenté face au carter, dans le sens de l'écoulement de la veine d'air, et est emmanché à force dans celui-ci, soit au maillet, soit au moyen d'un outillage spécial (presse à vis, hydraulique, etc. ...). Cette opération est facilitée par la structure en fibre de verre époxy qui possède une certaine élasticité. Les trois portées 9, 10, 11 du support s'encastrent simultanément dans les portées correspondantes 12, 13, 14 du carter.

L'arrêt en rotation du support est assuré au moyen des boulons 20 avant mise en place des panneaux acoustiques 21.

En cas de détérioration n'entamant pas le stratifié de la virole intérieure 1, on répare le revêtement d'étanchéité en «tartinant» du matériau qui dans ce cas est à base de résine synthétique, puis en réusinant à la cote le revêtement.

En cas de détérioration importante, le support est démonté d'une pièce, sans démontages importants d'accessoires (tuyauteries, etc. ...) et sans démontage du carter. Après démontage des panneaux acoustiques 21 et des boulons 20, on exerce une poussée à l'aide d'un extracteur sur la face radiale de la virole arrière à profil en U 19. Le support est alors réparé ou changé et remonté comme indiqué ci-dessus.

Un support de revêtement d'étanchéité tel que décrit dans l'invention, présente un grand intérêt sur le plan de la simplification de la maintenance, mais un autre intérêt réside dans le fait qu'il est constitué de matériaux légers (fibres de verre, résines) qui permettent de réaliser un gain de masse important.

Einfin, la nature même du matériau et l'effet d'emmanchement permettent d'obtenir un effet d'amortisseur, afin de prévenir les interactions destructrices aubes-carter, résultant d'une excitation vibratoire de celui-ci.

Il est évident que les avantages précédents se retrouveraient à un degré moindre si les viroles éloignées du revêtement d'étanchéité étaient en un matériau métallique léger autre qu'une résine synthétique.

**Revendications**

1. Support amovible de revêtement d'étanchéité pour carter de soufflante de turboréacteur, le carter (15) étant au moins partiellement revêtu de panneaux acoustiques, caractérisé en ce que le support amovible est constitué d'au moins deux viroles concentriques à l'intérieur du carter: une virole intérieure (1) dont une partie (4) de la surface interne présente un profil adapté à l'écoulement de la veine d'air (5) et dont une autre partie (6) correspondant approximativement à la zone couverte par les aubes (7) du rotor, porte d'une manière indesolidarisable le revêtement d'étanchéité (8), une virole extérieure (3) présentant sur sa surface externe des portées cylindriques (9, 10, 11) susceptibles de coopérer par emmanchement avec des portées (12, 13, 14) prévues sur la surface intérieure du carter (15), l'espace (16, 17 et 18) compris entre les deux viroles (1, 3) étant rempli par un matériau de remplissage, et d'au moins une virole (19) de section en U fixant l'une à l'autre, par au moins l'une de leurs extrémités (4, 27), les deux viroles concentriques (1, 3), la partie (19a) solidaire de la virole extérieure (3) recevant, en dehors et en arrière de la zone couverte par les aubes (7), des moyens de liaison (20) qui immobilisent en rotation le support dans le carter (15).

2. Support amovible de revêtement d'étanchéité pour carter de soufflante de turboréacteur, selon la revendication 1, caractérisé en ce qu'il comporte trois viroles concentriques (1, 2, 3), une virole intérieure (1) de faible épaisseur, une virole intermédiaire (2) structurale supportant sur au moins une partie (26) de sa surface interne la virole intérieure (1) de faible épaisseur, soit directement, soit par l'intermédiaire d'un matériau de remplissage, une virole extérieure (3), et d'une virole en U (19) fixant par une de leurs extrémités (4, 25, 27) les trois viroles concentriques (1, 2, 3), les autres extrémités (23, 26) de la virole intérieure (1) et de la virole intermédiaire (2) étant solidarisées.

3. Support amovible de revêtement d'étanchéité pour carter de soufflante de turboréacteur, selon la revendication 2, caractérisé en ce que la virole intérieure (1) présente dans le sens de l'écoulement de la veine d'air, au moins une première partie cylindrique (23) comportant une extrémité repliée (28) et une deuxième partie conique (6) sur lesquelles est fixé le revêtement d'étanchéité (8), et une troisième partie sensiblement cylindrique (4) suivant le profil aérodynamique d'écoulement (5), en ce que la virole intermédiaire (2) présente dans le sens de l'écoulement de la veine d'air une première partie cylindrique (26) s'étendant approximativement sur les première partie cylindrique (23) et deuxième partie conique (6) de la virole intérieure (1), une deuxième partie conique (24) recouvrant approximativement la troisième partie cylindrique (4) de la virole intérieure (1), une troisième partie cylindrique (25) venant approximativement dans le prolongement de la troisième partie cylindrique (4) de la virole intérieure (1), et en ce que la virole extérieure (3) présente dans le sens de l'écoulement de la veine d'air quatre parties cylindriques (11, 10, 9, 27) de diamètres décroissants, au moins une des premières parties cylindriques (10) étant solidarisée de la première partie cylindrique (26) de la virole intermédiaire (2), et en ce que la virole en forme de U (19) est fixée entre la troisième partie cylindrique (25) de la virole intermédiaire (2) et la quatrième partie cylindrique (27) de la virole extérieure (3), et comporte, sur sa partie (19b) solidaire de la virole intermédiaire (2) des moyens de fixation (22) des panneaux acoustiques (21) et en ce que les extrémités des premières parties cylindriques (11, 26) des viroles extérieure (3) et intermédiaire (2) sont reliées par l'extrémité repliés (28) de la virole intérieure (1).

4. Support amovible de revêtement d'étanchéité pour carter de soufflante de turboréacteur, selon l'une des revendications précédentes, caractérisé en ce qu'au moins la virole intérieure (1) est en résine synthétique renforcée par des fibres.

**Claims**

1. Detachable support of a fluid-tight lining for the casing of the fan of a turbojet engine, the casing (15) being at least partially covered with acoustic panels, characterized in this that the detachable support is constituted by at least two annular-section members within the casing: an interior section (1) of which one part (4) of the internal surface has a profile adapted to the flow of the air mass (5) and of which another part (6) corresponding approximately to the zone covered by the rotor blades (7) carries in a nondetachable manner the fluid-tight lining (8), an external section (3) having on its outer surface cylindrical abutments (9, 10, 11) arranged to cooperate by fitting with abutments (12, 13, 14) provided on the internal surface of the casing (15), the space (16, 17, 18) lying between the two annular-section members (1, 3) being filled by a filler material, and with at least one annular-section member (19) of U-section securing the one to the other, by at least one of their ends (4, 27), the two concentric annular-section members (1, 3), the part (19a) rigid with the outer annular-section member (3) accomodating, externally of and to the rear of the zone covered by the said blades (7), connection means (20) which secure against rotation the support within the casing (15).

2. Detachable support of fluid-tight lining for the casing of the fan of a turbojet engine, according to Claim 1 characterized in this that it comprises three concentric annular-section members (1, 2, 3), an internal section (1) of small thickness, an intermediate, structural, annular-section member (2) supporting on at least one part (26) of the internal surface of the internal annular-section member (1) of small thickness, either directly, or through the intermediary of a filler material, an external section (3), and one annular-section member of U-shape (19) securing, by one of its ends (4, 25, 27) the three concentric annular-section members (1, 2, 3), the other ends (23, 26) of the inner annular-section member (1) and of the intermediate section (2) being rigid with one another.

3. Detachable support of fluid-tight lining for the casing of the fan of a turbojet engine, according to Claim 2, characterized in this that the inner annular-section member (1) has in the direction of flow of the air mass, at least one first cylindrical part (23) comprising a folded end (28) and a second conical part (6) on which the fluid-tight lining (8) is secured, and a third substantially cylindrical part (4) following the aerodynamic flow profile (5), in this that the intermediate annular-section member (2) has in the direction of flow of the air mass a first cylindrical part (26) extending approximately over the first cylindrical part (23) and second conical part (6) of the inner section (1), a second conical part (24) approximately corresponding to the third cylindrical part (4) of the internal annular-section member (1), a third cylindrical part (25) corresponding approximately to the extension of the third cylindrical part (4) of the internal annular-section member (1), and in this that the external section (3) has in the direction of flow of the air mass four cylindrical parts (11, 10, 9, 27) of decreasing diameter, at least one of the first cylindrical parts (10) being rigid with the first cylindrical part (26) of the intermediate annular-section member (2), and in this that the annular-section member of U-shape (19) is secured between the third cylindrical part (25) of the intermediate annular-section member (2) and the fourth cylindrical part (27) of the external annular-section member (3), and comprises, at the part (19b) rigid with the intermediate annular-section member (2) securing means (22) for acoustic panels (21), and in this that the ends of the first cylindrical parts (11, 26) of the outer annular-section (3) and intermediate annular-section members (2) are connected by the folded end (28) of the internal annular-section member (1).

4. Detachable support of fluid-tight lining for the casing of the fan of a turbojet engine, according to any one of the preceding claims, characterized in this that at least the internal annular-section member (1) is of synthetic resin reinforced by fibres.

## Patentansprüche

1. Abnehmbare Halterung für Dichtungsschürzen in dem Gehäuse eines Turboluftstrahltriebwerks, bei dem das Gehäuse (15) mindestens teilweise mit Schallschluckplatten belegt ist, dadurch gekennzeichnet, dass die abnehmbare Halterung aus mindestens zwei konzentrischen Ringen im Inneren des Gehäuses besteht: einem inneren Ring (1), bei dem ein Teil (4) der Innenseite ein dem abfliessenden Luftstrom (5) angepasstes Profil aufweist und bei dem ein anderer Teil (6), der etwa dem von den Rotorschaufeln (7) überstrichenen Bereich entspricht, untrennbar damit verbunden die Dichtungsschürze (8) trägt, einem äusseren Ring (3), der an seiner Aussenseite zylindrische Anlageflächen (9, 10, 11) aufweist, die in an der Innenseite des Gehäuses (15) vorgesehene Anlageflächen (12, 13, 14) einpassbar sind, wobei der Raum (16, 17 und 18) zwischen den beiden Ringen (1, 3) mit einem Füllmaterial angefüllt ist, und mindestens einem Ring (19) mit U-förmigem Querschnitt, der die beiden konzentrischen Ringe an mindestens einem ihrer Enden (4, 27) fest miteinander verbindet, wobei der mit dem äusseren Ring (3) fest verbundene Teil (19a) ausserhalb und hinter der von den Schaufeln (7) überstrichenen Zone Verbindungselemente (20) aufweist, die die Halterung in dem Gehäuse (15) drehfest verankern.

2. Abnehmbare Halterung für Dichtungsschürzen in dem Gehäuse eines Turboluftstrahltriebwerks, nach Anspruch 1, dadurch gekennzeichnet, dass drei konzentrische Ringe (1, 2, 3) vorgesehen sind, ein innerer Ring (1) geringer Stärke, ein mittlerer, aussteifender Ring (2), der auf mindestens einem Teil (26) seiner Innenfläche den inneren Ring (1) geringer Stärke entweder direkt oder über ein Füllmaterial trägt, ein äusserer Ring (3) und ein U-förmiger Ring (19), der die drei konzentrischen Ringe (1, 2, 3) an einem ihrer Enden hält, während die anderen Enden (23, 26) des inneren Ringes (1) und des mittleren Ringes (2) fest miteinander verbunden sind.

3. Abnehmbare Halterung für Dichtungsschürzen in dem Gehäuse eines Turboluftstrahltriebwerks, nach Anspruch 2, dadurch gekennzeichnet, dass der innere Ring (1) in Fliessrichtung des Luftstroms mindestens einen ersten zylindrischen Teil (23) aufweist, dessen eines Ende (28) abgekantet ist, und einen zweiten konischen Teil (6), an dem die Dichtungsschürze (8) befestigt ist, und einen im wesentlichen zylindrischen dritten Teil (4), der dem aerodynamischen Strömungsprofil (5) folgt, dass der mittlere Ring (2) in Fliessrichtung des Luftstroms einen ersten zylindrischen Teil (26) aufweist, der sich ungefähr über den ersten zylindrischen und den zweiten konischen Teil (23 und 6) des inneren Ringes (1) erstreckt, wobei ein zweiter konischer Teil (24) ungefähr den dritten zylindrischen Teil (4) des inneren Ringes (1) überdeckt und ein dritter zylindrischer Teil (25) ungefähr in der Verlängerung des dritten zylindrischen Teils (4) des inneren Ringes (1) verläuft, dass der äussere Ring (3) in Fliessrichtung des Luftstroms vier zylindrische Teile (11, 10, 9, 27) mit abnehmenden Durchmessern aufweist, wobei mindestens einer der ersten zylindrischen Teile (10) mit dem ersten zylindrischen Teil (26) des mittleren Ringes (2) starr verbunden ist, dass der U-förmige Ring (19) zwischen dem dritten zylindrischen Teil (25) des mittleren Ringes (2) und dem vierten zylindrischen Teil (27) des äusseren Ringes (3) befestigt ist und auf seinem mit dem mittleren Ring (2) starr verbundenen Teil (19b) Befestigungselemente (22) für Schallschluckplatten (21) aufweist, und dass die Enden der ersten zylindrischen Teile (11, 26) des äusseren (3) und inneren Ringes (2) durch das abgekantete Ende (28) des inneren Ringes (1) verbunden sind.

4. Abnehmbare Halterung für Dichtungsschürzen in dem Gehäuse eines Turboluftstrahltriebwerks, nach einem der vorhergehenden Ansprüche, dadurch gekennzeichnet, dass mindestens der innere Ring (1) aus glasfaserverstärktem Kunststoff besteht.